# EUROPEAN PATENT APPLICATION

(11) **EP 3 825 858 A1**
(43) Date of publication of application: **26.05.2021**
(21) Application number: 18925672.0
(22) Date of filing: 05.07.2018
(51) Int. Cl.: G06F 13/00, G06F 17/40, G06Q 50/06, G01D 4/00, H04L 29/10, H04L 12/00

(54) **SECURE MESHNET SYSTEM FOR SHARING DATA AND RESPECTIVE COUPLING AND INTERFACE DEVICES**

(71) Applicant: Nouvenn Corporation, Wilmington, New Castle County, DE 19801 (US); Francisco, Mathieu, Curitiba, PR (BR)
(72) Inventor: MATHIEU, Francisco, CEP-80240-000 Batel - Curitiba, PR (BR)
(74) Representative: Díaz de Bustamante y Terminel, Isidro
(86) International application number: PCT/BR2018/000037
(87) International publication number: WO 2020/006612

(57) **Abstract**

The present patent application is a design for a secure meshnet system for sharing data and respective coupling and interface devices, which pertains to the field of articles for computing and data sharing; the invention relates to the use of "Software Defined Networking" (SDN), "Software Defined Radio" (SDR), "Network Functions Virtualization" (NFV) and meshnet technologies in conjunction with "mesh" topology networks, using robust, reliable and flexible networks for creating and setting up an architecture that allows the operation of distributed and flexible services; advancement in terms of communication technology has led to a need to devise processes for data exchange and efficient, agile remote actuation, and a need to manage these new solutions with structures of low complexity and low inherent cost; current and conventional networks (fibre optics, routers, etc.) are complex and expensive because they require a great deal of installation infrastructure and require ongoing, costly maintenance; the subject matter of the present patent relates to operational leveraging on a highly interconnected and semi-autonomously managed proprietary smart network, the architecture of which has four main components: base network; network controller; "Network Function Provider" network controller; and network interconnection node.

## Description

### Field of the invention

The object of the present invention patent is an innovative secure mesh network system and its respective coupling and interface devices, belonging to the field of computing and data sharing; more precisely, the invention refers to the use of technologies called "Software Defined Networking" (SDN), "Software Defined Radio" (SDR), "Network Functions Virtualization" (NFV) and mesh networks together with "mesh" topology networks, using highly robust, reliable, and flexible networks for the creation and implementation of an architecture that allows for the operation of distributed and flexible services.

The secure mesh network system and the respective coupling and interface devices, which are the object of the present patent application, have several applications, such as in automated measurement system of inputs (meters), interruption of inputs, contingency communication systems and alarms, Bluetooth communication systems, "RF" network interconnections, etc.

In general, mesh networks are commonly used to connect devices with low costs, high ruggedness and reliability. Recent advances in the computational and communication capacity of "System on Chip" microcontrollers enable the creation of increasingly complex applications that run on these platforms. The proposed architecture allows the use of a meshed network to virtualize other networks and allow complex and integrated applications to be created from software adjustments.

The main technologies used are:
a) "Software Defined Networking" (SDN): allows the network topology to be logically redefined through software.
b) "Software Defined Radio" (SDR): allows radio communication parameters (such as data rate, transmission power, modulation, coding, channel, spectral spreading parameters, etc.) to be redefined through software.
c) "Network Function Virtualization" (NFV): allows entire classes of network functions to be virtualized. This is done by exporting low-level functionalities (such as SDN and SDR) to high-level applications, which can create networks, services, applications and virtual devices that can interact transparently with the real world, as if they were real devices and networks.
d) "Mesh networks": this technology allows the creation of highly robust networks of low operating cost, with applications mainly in urban and suburban environments.
The network is characterized by the fact that each node in the network is able to function as a repeater, relaying messages and, therefore, extending coverage and increasing the robustness of the network. The more nodes the network has, the more robust it is.

The invention comprises the use of all these technologies along with "mesh" topology networks, using highly robust, reliable and flexible networks for the creation and implementation of an architecture that allows for the operation of distributed and flexible services.

It is, therefore, a system developed with perfection and efficiency, in order to offer a secure mesh network system, providing great reliability to its purposes, both for its functional characteristics and for the reliability of the product.

For a better understanding of the object of the present application, there are some basic definitions below.

Systems virtualization is commonly used in the industry. Cloud Servers share the same physical hardware infrastructure to run multiple instances of different operating systems, offering logical isolation between two users, thereby saving a lot of money on hardware infrastructure. Currently, some servers share thousands of virtualized environments, which operate transparently as if they were thousands of different servers.

Network virtualization is also widely applied in industry, and several technologies are used based on this concept "VLAN", "MPLS", "Tunnel IP-IP", "Tunnel 6in4", "tunnel 4in6", "SSH", etc. These technologies allow multiple independent networks to share the same physical infrastructure (such as cables, switches, routers, etc.).

There is also an alternative network architecture that is part of the group of architectures known as "FIA" (Future Internet Architectures) called "RINA" (Recursive InterNet-work Architecture) that uses simple logic blocks that implement all network functions that can be stacked indefinitely, simplifying network maintenance, mobility and design.

### State of the art

The United States patent document US 7089089 B2, entitled "METHODS AND APPARATUS FOR RETRIEVING ENERGY READINGS FROM AN ENERGY MONITORING DEVICE", discloses an energy-monitoring device, including procedures for secure device data communication. The power-monitoring device includes a public/private key pair used to encrypt and/or digitally sign communications through the device. This allows the recipients of these communications to authenticate communications to ensure that the device and/or communications have not been compromised. The energy-monitoring device is also capable of communicating through an "ad-hoc" mesh network, thus facilitating communications between devices that are substantially inaccessible due to physical or economic limitations.
- The United States patent document US 7715951 B2, entitled "SYSTEM AND METHOD FOR MANAGING CONSUMPTION OF POWER SUPPLIED BY AN ELECTRIC UTILITY" discloses a system to manage the consumption of power supplied by an electrical utility for an energy consumption device that includes at least one client device and one server. Each client device operates at least partially to control messages received from the server and controls the operation of one or more controllable devices. Each selectively controllable device enables and disables an energy flow to one or more of the consumer devices. The server stores information, on a device-by-client basis, related to the power consumed by the consumer devices. When a power cut is requested by the utility, the server select, based on the client device information stored in the database, at least one client device to which it issues a power cut message that indicates an amount of energy to be reduced and an identifiable device to be instructed to disable a flow of energy.
- Patent document US8996188B2, entitled "SYSTEM AND METHOD FOR HOME ENERGY MONITOR AND CONTROL", relates to a system and method for monitoring and controlling the power consumption of an electrical device. The system and method can connect to a power source and a power-consuming device, connecting the power-consuming device to the power source. The power consumption of the consuming device can then be measured and monitored. This monitoring data can be stored and optionally sent to a control device on a data network. The location of the power consumption device can also be determined, recorded and sent to a control device. The system can also control the power consumption of the power consumption device. In some cases, a remote server can connect multiple power monitoring systems to obtain additional efficiencies and foster a community-based social network.
- Patent document US2011/0063126 A1 entitled "COMMUNICATION HUB FOR RESOURCE CONSUMPTION MANAGEMENT", reveals a communication architecture to manage/relay information on utilities, such as energy, water or gas. In one aspect, the system includes a hub with a first communication interface for receiving consumption data from a predetermined energy load and a second communication interface to communicate with a metering device. The second communication interface is configured to transmit the consumption data to the measuring device and to receive control signals from the measuring device wherein the consumption data is communicated using a first protocol and the control signals are communicated using a second protocol.
- Patent document US 2010/0076615 A1, entitled "ELECTRIC POWER SUPPLY SYSTEMS, DEVICES AND METHODS, USE MONITORING, ANALYSIS AND ENABLING EFFICIENCY IMPROVEMENTS", refers to systems, devices and methods for the efficient use of utilities, more particularly to the distribution and supply of electricity at appropriate voltages, monitoring and use by end devices, and to enable consumers to change their energy use behavior, and to easily adopt and install the appropriate sustainable, energy-efficient or renewable technologies. Such end devices typically include traditional electrical, electronic and lighting devices that require AC or DC power supply or low voltage DC power via AC/DC converters.
- Patent document US8588991B1, entitled "SYSTEM, METHOD AND APPARATUS FOR THE ELECTRIC POWER NETWORK AND THE MANAGEMENT OF ACTIVE GRID ELEMENT NETWORKS", reveals a system where the grid elements are transformed into active grid elements after the initial registration of each grid element with the system, preferably through network-based communication between grid elements and a coordinator, either in coordination with or out of an IP-based communications network router. A multitude of active grid elements work in the grid for the source's capacity, with the source and/or load limitation as source or capacity. Also preferably, messages are managed over a network by a coordinator using IP messages to communicate with the grid elements, with the energy management system (EMS), and with utilities, market participants and/or network operators.

In addition to the documents mentioned above, a list of patent documents follows, but of less relevance to the patent in question.
- US7761910B2, entitled "SYSTEM AND METHOD FOR ASSIGNING AN IDENTITY TO AN INTELLIGENT ELECTRONIC DEVICE".
- US8583520B1, entitled "SETTLEMENT SYSTEM, METHOD AND APPARATUS FOR PARTICIPATION IN A POWER NETWORK".
- US20100217549A, entitled "SYSTEM AND METHOD FOR SMART FRACTIO-NED MEASUREMENT".
- US7873441B2, entitled "SYSTEM FOR THE EXECUTION OF AN OPERATIONAL LOAD PLAN FOR LOAD CONTROL".
- US8183995B2, entitled "SYSTEMS AND METHODS TO MODIFY POWER USE".
- US6985087B2, entitled "METHOD AND APPARATUS FOR WIRELESS REMOTE TELEMETRY USING AD HOC NETWORKS".
- US20130035992A, entitled "METHOD AND SYSTEM FOR THE MORE EFFICIENT USE AND CONSERVATION OF ENERGY AND WATER RESOURCES".

### Disadvantages of the state of the art

As one may notice, none of these patent documents known to the state of the art has the characteristics of the object of the present patent application.

Communication technology advances rapidly, and there is a need to obtain data exchange and remote action processes efficiently and quickly, and the need to manage these new solutions with low complexity structures with an inherent low cost. In this context, current and traditional networks (fiber optics, routers, etc.) are complex and expensive, since they require extensive infrastructure for their installation and require constant and expensive maintenance.

Private and public companies are seeking to provide their target audiences quickly and broadly with new services that bring a good financial return over a reasonable period of time, without having to resort to very high investments.

Although systems and network virtualization technologies are widely used in business environments, universities and in wired networks, there is no solution that effectively implements these concepts in wireless networks, especially in mesh networks.

### Proposed solution

In view of this, over time studies and research were carried out to meet this market demand; as a result, a technological solution was developed that uses the concept of "Smart Grid" with "Mesh Network", which is able to meet practically all the demands proposed within the concept of "IOT" (Internet Of Things).

From the premise of installing bidirectional interface equipment and software connected to other measurement equipment, to interact, act and manage them remotely, the "SAFE MESH NETWORK SYSTEM FOR DATA SHARING AND ITS RESPECTIVE COUPLING AND INTERFACE DEVICES" was developed, which comprises a generic solution of using an "NFP" for the creation of virtual networks in wireless or mesh network environments.

This is a complete solution comprising the concepts mentioned above, that is, operational advantage on a highly interconnected and semi-autonomous proprietary intelligent network.

This solution has the ability to interconnect, manage and operate on any type of connectable equipment. For instance, equipment for the supply of electricity, water, gas, traffic control, residential and industrial machinery, among others.

Starting from this premise, today, added to the cutting edge resource, we have the following complementary concepts:
- "Automatic Meter Reading" (AMR): This is the technology that allows for the automatic collection of consumption data - e.g. power, water, gas and almost anything else.
- "Advanced Metering Infrastructure" (AMI): Network infrastructure for automated bidirectional communication between measurement devices and a control and operation center.

### Brief description of the drawings of the invention

To complement the present description and obtain a better understanding of the characteristics of the present invention and in accordance with its preferred embodiment, the follow description refers to a set of drawings, where, in an exemplified way, although not limiting, the following are represented:

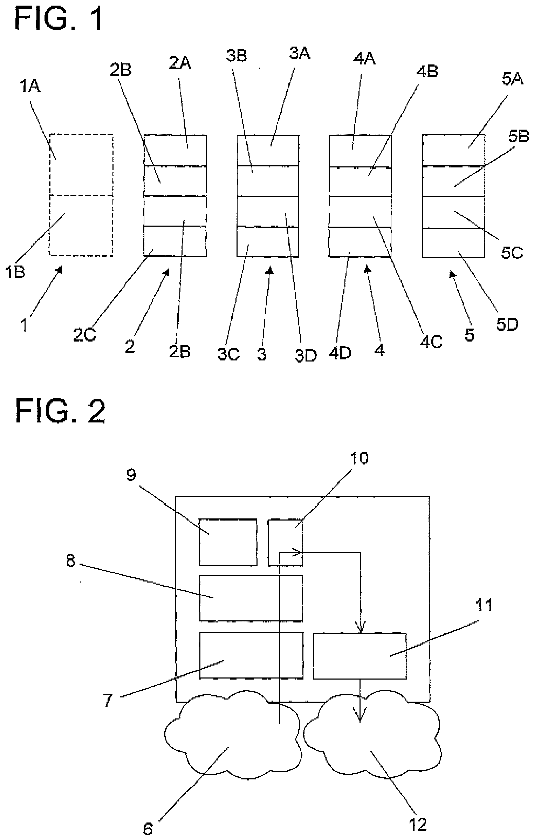

- FIG. 1 - Shows a diagram that illustrates the network layers and some of the possibilities of the virtualization architecture. This includes: a virtual network built on a base network (1), in which there is a virtual network (1A) and base network (1B); a typical scenario of IP virtualization over IP (2), where there is an application (2A), TCP/IP (2B) and ethernet/Wi-Fi (2C); a virtual ZigBee network over 6L0WPAN mesh (3), where there is application (3A), ZigBee (3B), UDP/6L0WPAN (3C) and IEEE802.15.5g (3D); a virtual Bluetooth network over 6L0WPAN mesh (4), where there is an application (4A), Bluetooth (4B),
- FIG. 2 - Shows a diagram illustrating the main components of a typical network interconnection node as well as a0 data stream destined to the virtual network. Here, one can see: the mesh base network (6), main radio (7), mesh network stack (8) (6L0WPN or similar), application (9), "NFP" (10), auxiliary radio (11) and virtualized network (12).

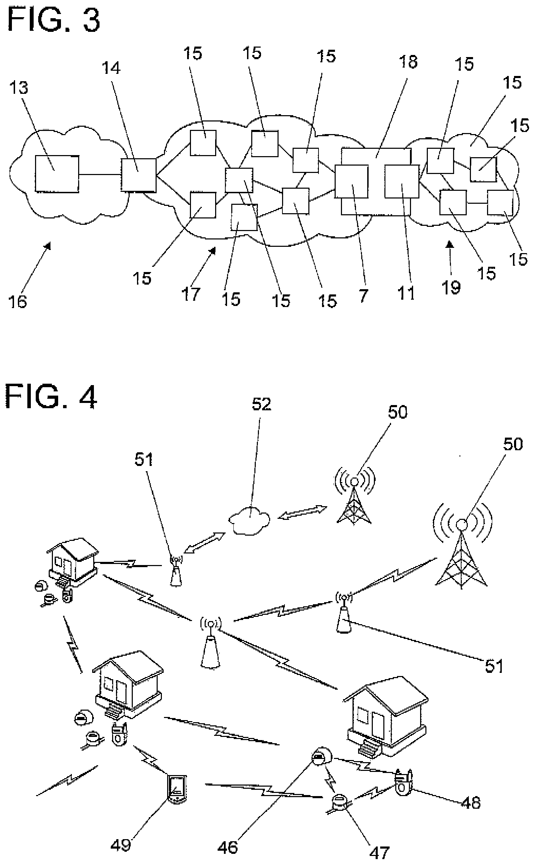

- FIG. 3 - Shows a diagram exemplifying and illustrating the network topology, showing the controller, which communicates with the interconnection node (via the base network) to the virtual network to customers. For end customers, the virtual network behaves like a real physical network in a transparent manner. In it, one may find; controller (13), edge router (14), node (15), main radio (7), auxiliary radio (11), network backbone (16), physical base of the network (mesh) (17), interconnection node (18) (base network client; virtual network coordinator) and virtualized network (19).
- FIG. 4 - Shows a "Smart utility Network" (concept used for the solution), comprising a network infrastructure to capture data from the measurement of energy, water, gas and the like. This represents the electricity meter (46) the water meter (47), the gas meters (48) the rover data (49), utility provider (50), the controller (51) and the external network (52).

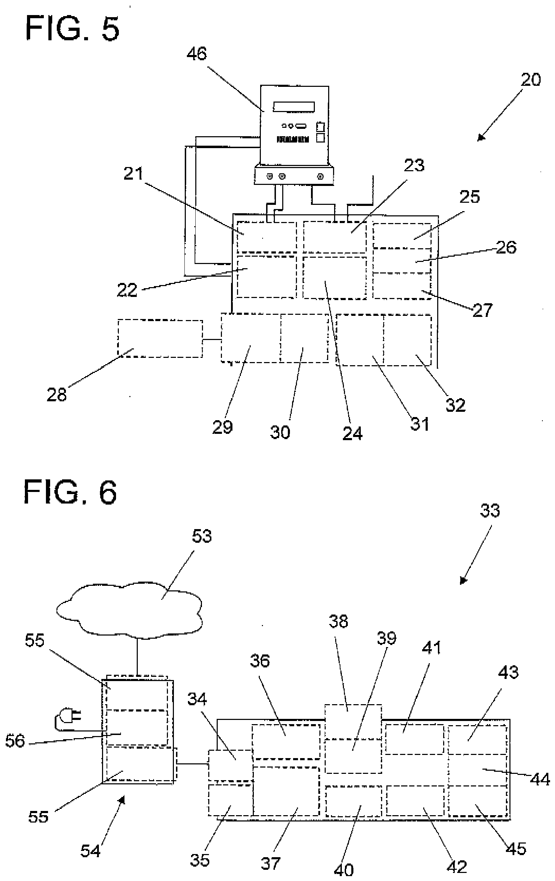

- FIG. 5 - Shows a diagram of the coupling device (20), or, simply, the router, connected to the electricity consumption meter (46).
- FIG. 6 - Shows a diagram of the interface device (33) or gateway, connected to the internet (53), through a "PoE" (Power Over Ethernet) source (54), which consists of ethernet ports (55) and an AC power supply (56).

### Detailed description of the invention

In accordance with what the above figures illustrate, the "SAFE MESH NETWORK SYSTEM FOR DATA SHARING AND ITS RESPECTIVE COUPLING AND INTERFACE DEVICES", object of this patent, refers to the operational advantage over a highly interconnected proprietary intelligent network and managed semi-autonomously.

More specifically, the architecture of the system being presented contains four main components: Mesh network; Network controller; "Network Function Provider" and Network interconnection node.

### Mesh network

It is the "bottom" network used as a network infrastructure to create the virtualized network. It must be a network that is flexible enough to have end-to-end addressing of all nodes, and supporting the delivery of datagrams. It is usually a TCP/IP network (IPv4 or IPv 6), or a proprietary network. It can also be a virtualized network.

### Network controller

It is one of the nodes in the network, usually running on the gateway itself or on some server that orchestrates, defines and controls all nodes in the network, being able to change radio and communication parameters of a node that is bridging the virtualized network and the base network.

### Network Function Provider

It is the software component that runs on the network node and that is capable of virtualizing applications and other networks. This component exports low-level network and radio functionalities to be accessed by the network controller.

### Network interconnection node

This is the physical component of the network that allows for communication. It is usually a node that contains more than one radio that can operate simultaneously.

Figure 2 illustrates the main components of a typical network interconnection node as well as a data stream destined to the virtual network.

This technology has several applications, such as automated meter measurement systems, contingency and alarm communication systems, Bluetooth communication systems, "RF" network interconnections, etc.

The automated meter measurement system comprises a system where meters that use different radio frequency technologies (such as Zigbee, Bluetooth, RF, etc.) can be accessed by the network node as long as the auxiliary radio supports the communication technology.

In the contingency and alarm communication system. The technology can be used to spread Bluetooth messages (or messages through some other radio system) in the event of a catastrophe or contingency situation.

In the Bluetooth communication system. It can be used to interconnect Bluetooth devices (such as cell phones) in order to exchange messages in an urban environment without the need to use the cellular network.

In the interconnection of "RF" networks. The system can allow different networks to be interconnected through the node that contains the "NFP" component.

For such applications, the coupling device (20), or simply router, and the interface device (33) or "gateway" were developed.

The coupling device (20) was designed to be coupled to any other device that requires an action, such as reading consumption, cutting and reconnecting power, water, gas, turning off and restoring a traffic light, cutting and restoring the supply of water in a given location (building, industry, block, and/or region etc.).

Said coupling device (20) is used to forward the "actions" via free Radio Frequencies to other "routers" up to a "gateway", forming a "Smart Mesh".

The coupling device (20) also has a specific radio frequency to interact with pieces of equipment, such as a smartphone, tablet, among others.

More specifically, the coupling device (20) or router is an electronic device, equipped with AN AC/DC power supply (21), PIMA interface (22), relay (23), MCU processor (24), LED power (25) , Relay LED (26), PIMA LED (27), optional external antenna (28), connector (29), radio for gateway (30), cellular radio (31) and Bluetooth antenna (32).

The interface device (33) interfaces with cells formed by routers, servers, telecommunications antennas and the internet.

Said interface device (33) consists of an ethernet port (34), USB port (35), AC/DC power supply (36), MCU processor (37), SIM card (38), GSM module (39) , GSM antenna (40), radio for router (41), router antenna (42), power LED (43), network LED (44) and GSM LED (45).

For a better understanding of the object of the present patent application, what follows is a brief description of some elements that integrate the system in question.

### "END-TO-END"

In "networking", this term refers to the exclusive communication between the source node and the destination node of which the intermediary components of the network are unaware, although they are involved in the interconnection process between the source and the destination. The flow control performed by "TCP" is an example of an end-to-end protocol.

### "MESH NETWORK"

Mesh network is a protocol alternative to the 802.11 standard for voice and data traffic guidelines in addition to cable networks or wireless infrastructure. Users in buildings can connect to the wired "mesh" network, usually via Ethernet, or wirelessly, over 802.11 networks.

### "ZIGBEE"

ZigBee is a standard that will be defined by an alliance of companies from different market segments, called "ZigBee Alliance". This protocol is being designed to allow for reliable wireless communication, with low power consumption and low transmission rates for monitoring and control applications.

### "SOFTWARE DEFINED NETWORKS" (SDN)

Software-defined networks (SDN) are obtained through the virtualization of network elements, such as routers, switches, among others. With this virtualization, these elements can be managed through software made for this purpose. With that, greater flexibility is achieved in the administration of these network elements, since the Software-defined networks allow programmability to exist on the network.

The future of networks will be defined by software. This was the main theme of the recent Open Networking Summit, a meeting dedicated to software-defined networks (SDN) and the OpenFlow protocol, which brings simplified programming to network devices (switches and routers, physical and virtual, from different suppliers) through of a standardized interface.

### "DOMOTICS"

"Domotics" is the term used in "Robotics", defined as the integration of automatic mechanisms in a space, simplifying people's daily lives, satisfying communication, comfort and safety needs.

Thus, it can be seen through the foregoing that the "SAFE MESH NETWORK SYSTEM FOR DATA SHARING AND ITS RESPECTIVE COUPLING AND INTERFACE DEVICES" in question is characterized as a very useful system, presenting all practical qualities and functionalities that fully justify the invention patent application.

## Claims

1. "SAFE MESH NETWORK SYSTEM FOR DATA SHARING", refers to a network architecture that has the ability to interconnect, manage and act on any type of connectable equipment, such as power, water, gas, control equipment traffic lights, residential andindustrial machines, among others; in general, the known mesh networks are commonly used to connect devices at a low cost, with high robustness and reliability, and recent advances in computational and communication capacity of "System on Chip" microcontrollers allow for the creation of applications that are increasingly complex and can be executed on these platforms, so the proposed architecture allows for the use of a meshed network to virtualize other networks and allow complex and integrated applications to be created from a software setting, so the solution that is hereby proposed allows for the use of a mesh network to virtualize other networks and allow complex and integrated applications to be created from software reconfiguration, **characterized by** the architecture containing four main components, which are: the base network, consisting of the "bottom" network used as a network infrastructure to create the virtualized network, which must be a network that is flexible enough to have end-to-end addressing for all nodes, and supporting the delivery of datagrams, usually a TCP/IP network (IPv4 or IPv 6 ), or a proprietary network, though it can also be a virtualized network; the network controller, which is one of the nodes in the network, usually running on the gateway itself or on some server that orchestrates, configures and controls all nodes in the network, with the ability of changing radio and communication parameters of a node that is making the bridge between the virtualized network and the base network; the "Network Function Provider", which is the software component that runs on the network node capable of virtualizing. applications and other networks, with this component exporting low-level network and radio functionalities to be accessed by the network controller; and finally, the network interconnection node, which is the physical component of the network that allows for communication, usually a node that contains more than one radio that can operate simultaneously.

2. "COUPLING DEVICE", according to the claim, developed to be coupled to any other device that requires an action, such as reading consumption, cutting and restoring power, water, gas, shutting down and restoring a traffic light, cutting and restoring the water supply in a given location (building, industry, block, and/or region etc., more specifically it is an electronic device **characterized by** the fact that it is equipped with an AC/DC power supply (21), PIMA interface (22), relay (23), MCU processor (24), LED power (25), LED relay (26), PIMA LED (27), external antenna optional (28), connector (29), radio for gateway (30), cellular radio (31) and Bluetooth antenna (32).

3. "INTERFACE DEVICE", according to claim 1 , performing the interface with cells formed by routers, servers, telecommunications antennas and the internet, **characterized by** being made up of an ethernet port (34), USB port (35), AC/DC power supply (36), MCU processor (37), SIM card (38), GSM module (39) , GSM antenna (40), radio for router (41), router antenna (42), power LED (43), network LED and GSM LED (45).

## Amended claims

### Amended claims under Art. 19.1 PCT

1. "SECURE MESH NETWORK SYSTEM FOR DATA SHARING", referring to a network architecture connectable to any technology containing four main components, base network, network controller, NFP (Network Function Provider) and a special interconnection node, with one or more radios, with the ability to manage and act on other connectable equipment, allowing operational leverage with use of the network itself, **characterized by** virtualizing other meshed networks, intelligent, proprietary, highly interconnected and managed semi-autonomously through the respective node containing the NFP and allowing applications to be created from their software configuration.

2. "SECURE MESH NETWORK SYSTEM FOR DATA SHARING", according to claim 1 , refers to a network architecture that can be connected to any technology, allowing the virtualization of networks through the NFP node with the creation of complex applications that can be executed on these platforms **characterized by** its architecture containing the base network, constituted by the "bottom" network used as a network infrastructure to create the virtualized network and with end-to-end addressing of all nodes and supporting the delivery of datagrams/packets.

3. "SECURE MESH NETWORK SYSTEM FOR DATA SHARING", according to claim 1 , referring to a network architecture that can be connected to any technology, allowing the virtualization of networks through the NFP node with the creation of complex applications that can be executed on these platforms **characterized by** said architecture virtualizing the same technology on itself.

4. "SAFE MESH NETWORK SYSTEM FOR DATA SHARING", according to claim 1 , referring to a network architecture that can be connected to any technology allowing the NFP node to virtualize networks with the creation of complex applications that can run on those platforms **characterized by** said architecture to creating a virtual wireless network over a wireless base network or not.

5. "SAFE MESH NETWORK SYSTEM FOR DATA SHARING", according to claim 1, referring to a network architecture that can be connected to any technology allowing the NFP node to virtualize networks with the creation of complex applications that can run on those platforms **characterized by** running on the gateway, node or server that orchestrates, configures and controls all nodes in the network, changing radio and communication parameters of a node that is bridging the virtualized network with the base network.

6. "SAFE MESH NETWORK SYSTEM FOR DATA SHARING", according to claim 1, referring to a network architecture connectable to any technology allowing the creation of increasingly complex applications that can be run on these platforms, **characterized by** its architecture containing a network controller that communicates and coordinates all NFPs that run on special nodes in the virtual network and by the controller being run on any node, whether in the base network or in the cloud.

7. "SAFE MESH NETWORK SYSTEM FOR DATA SHARING", according to claim 1, refers to a network architecture connectable to any technology allowing the creation of increasingly complex applications that can be run on these platforms, **characterized by** the architecture running the NFP (Network Function Provider) that communicates with the network controller and exchanges control information and data trafficked on one or more radios present on the node, and the technologies of the base network and the virtualized network being executed in the same radio or with the technology being virtualized over itself.

8. "SAFE MESH NETWORK SYSTEM FOR DATA SHARING", according to claim 1, refers to a network architecture connectable to any technology allowing the creation of increasingly complex applications that can be run on these platforms, **characterized by said** node being a physical component of the special interconnection network, with one or more radios, running the NFP and supporting more than one wireless communication technology and applications that export functionalities to a remote program.

9. "SAFE MESH NETWORK SYSTEM FOR DATA SHARING", according to claim 1, referring to a network architecture connectable to any technology **characterized by** the NFP being coupled to any other device that requires an action, such as reading consumption, cutting power, water, gas, shutting down and restoring traffic light, cutting and restoring the water supply in a given location (building, industry, block, and/or region etc.), more specifically it is an electronic device with a power supply.
